(19) **Europäisches Patentamt / European Patent Office / Office européen des brevets**

(11) **EP 2 157 656 B1**

(12) **EUROPEAN PATENT SPECIFICATION**

(45) Date of publication and mention
of the grant of the patent:
**16.07.2014 Bulletin 2014/29**

(21) Application number: **08739809.5**

(22) Date of filing: **03.04.2008**

(51) Int Cl.:
*H01M 10/42* (2006.01)  *H01M 10/0525* (2010.01)
*H01M 10/056* (2010.01)  *H01M 10/0567* (2010.01)
*H01M 10/0569* (2010.01)

(86) International application number:
**PCT/JP2008/056702**

(87) International publication number:
**WO 2008/126767 (23.10.2008 Gazette 2008/43)**

(54) **NONAQUEOUS ELECTROLYTE SOLUTION FOR BATTERY AND NONAQUEOUS ELECTROLYTE BATTERY COMPRISING THE SAME**

WASSERFREIE ELEKTROLYTLÖSUNG FÜR EINE BATTERIE UND BATTERIE MIT DIESEM WASSERFREIEM ELEKTROLYT

SOLUTION D'ÉLECTROLYTE NON AQUEUSE POUR BATTERIE ET BATTERIE À ÉLECTROLYTE NON AQUEUSE LA CONTENANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **05.04.2007 JP 2007099590**

(43) Date of publication of application:
**24.02.2010 Bulletin 2010/08**

(73) Proprietor: **Bridgestone Corporation**
**Tokyo 104-8340 (JP)**

(72) Inventor: **HORIKAWA, Yasuo**
**Kodaira-shi**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
**WO-A1-2005/036690**  **JP-A- 2001 023 687**
**JP-A- 2002 075 444**  **JP-A- 2005 116 424**
**JP-A- 2006 185 829**  **US-A1- 2005 153 207**
**US-A1- 2006 124 973**  **US-A1- 2006 134 527**

**Description**

TECHNICAL FIELD

This invention relates to a non-aqueous electrolyte for a battery and a non-aqueous electrolyte battery comprising the same, and more particularly to a non-aqueous electrolyte for a battery having high flame retardance and capable of providing a positive electrode material of a battery with high heat resistance, and a non-aqueous electrolyte battery having excellent battery performances and comprising a positive electrode having high heat resistance.

BACKGROUND ART

The non-aqueous electrolyte is used as an electrolyte for a lithium battery, a lithium ion secondary battery, an electric double layer capacitor or the like. These devices have a high voltage and a high energy density, so that they are widely used as a driving power source for personal computers, mobile phones and the like. As the non-aqueous electrolyte are generally used ones obtained by dissolving a support salt such as $LiPF_6$ or the like in an aprotic organic solvent such as a carbonate compound, an ether compound or the like. However, since the aprotic organic solvent is combustible, if it leaks from the device, there is a possibility of firing-burning and also there is a problem in view of the safety.
As to this problem is examined a method for rendering the non-aqueous electrolyte into a flame retardance. For example, there are proposed a method wherein a phosphate such as trimethyl phosphate or the like is used in the non-aqueous electrolyte, and a method wherein the phosphate is added to the aprotic organic solvent (see JP-A-H04-184870, JP-A-H08-22839 and JP-A-2000-182669). However, these phosphates are gradually reduction-decomposed on a negative electrode by repetition of discharge and recharge, so that there is a problem that battery performances such as discharge-recharge efficiency, cyclability and the like are largely deteriorated.
As to the latter problem, there are attempted a method wherein a compound for suppressing the decomposition of the phosphate is further added to the non-aqueous electrolyte, a method wherein the molecular structure of the phosphate itself is devised, and so on (see JP-A-H11-67267, JP-A-H10-189040 and JP-A-2003-109659). Even in these methods, however, there is a limit in the addition amount and also the flame retardance of the phosphate itself is deteriorated and the like, so that the electrolyte gets only into the self-extinguishing property and the safety of the electrolyte cannot be sufficiently ensured.
Also, JP-A-H06-13108 discloses a method wherein a phosphazene compound is added to the non-aqueous electrolyte for giving the flame retardance to the non-aqueous electrolyte. Some of the phosphazene compounds exhibit a high non-combustibility and have a tendency to improve the flame retardance of the non-aqueous electrolyte as the amount added to the non-aqueous electrolyte is increased. However, since the phosphazene compound exhibiting the high non-combustibility is generally low in the solubility of a support salt and the dielectric constant, as the addition amount is increased, the precipitation of the support salt and the lowering of electric conductivity are caused, and hence the discharge capacity of the battery may be lowered or the discharge-recharge performance may be deteriorated. Therefore, when the phosphazene compound exhibiting the high non-combustibility is added, there is a problem that the addition amount is limited.
Further, it is important to suppress a pyrolysis reaction of the non-aqueous electrolyte and the electrode material of the battery for improving the safety of the battery, in addition to rendering the non-aqueous electrolyte into the flame retardance as described above. Especially, the electrode material of the battery recharged is pyrolyzed more easily than the electrode material of the battery discharged at low temperature, and this may trigger explosion and ignition of the battery. Among the electrode materials of the battery, a metal oxide is often used in the positive electrode, and some positive electrodes generate heat due to the pyrolysis depending on a kind of the metal at lower temperature as compared with a negative electrode, and further generate free oxygen during the pyrolysis. The release of the free oxygen causes the explosion of the battery, the free oxygen also serves as an auxiliary agent for the ignition and combustion and thereby is said to be one of critical factors giving the risk to the battery. The non-aqueous electrolyte has a large impact on such pyrolysis of the positive electrode, and it is also known that the non-aqueous electrolyte has a large impact on decomposition temperature and heat release value of the positive electrode (Journal of Power Sources, 70(1998), 16-20).
Reference is also made to US2006/124973, US2006/134527, US2005/153207 and JP 2006-185829, which disclose non-aqueous electrolytes for batteries according to the preamble of claim 1.
As mentioned above, it is important to render the electrolyte into the non-combustibility and to improve the heat resistance of the electrode material of the battery for improving the safety of the battery, but the conventional techniques cannot be said to have a satisfactory level in simultaneously accomplishing these matters.

DISCLOSURE OF THE INVENTION

It is, therefore, an object of the invention to solve the above-mentioned problems of the conventional techniques and to provide a non-aqueous electrolyte for a battery having high flame retardance and capable of giving high heat resistance to a positive electrode material of a battery, and a non-aqueous electrolyte battery comprising such a non-aqueous electrolyte for a battery, exhibiting stable battery performances even under a high load condition and having high safety.

The inventor has made various studies in order to achieve the above objects and discovered that high flame retardance can be given to a non-aqueous electrolyte by constructing the electrolyte by combining a specified cyclic phosphazene compound with a specified methyl ester compound, a non-aqueous electrolyte battery using such an electrolyte has excellent discharge performances even under a high load condition, and further a positive electrode of such a battery has high heat resistance, and as a result the invention has been accomplished.

That is, the present invention provides a non-aqueous electrolyte for a battery comprising a support salt, characterized by further comprising a non-aqueous solvent containing a cyclic phosphazene compound represented by the following general formula (I):

$$(NPR_2)_n \qquad (I)$$

wherein Rs are independently fluorine, an alkoxy group or an aryloxy group, at least four of the Rs in the general formula (I) are fluorine and at least one of the Rs is an alkoxy group or an aryloxy group; and n is 3-4, and at least one methyl ester compound selected from the group consisting of methyl acetate, methyl propionate and methyl butyrate.

In a preferable embodiment of the non-aqueous electrolyte for the battery according to the invention, a content of the cyclic phosphazene compound represented by the general formula (I) is 30-50% by volume based on the whole of the non-aqueous electrolyte for the battery.

In another preferable embodiment of the non-aqueous electrolyte for the battery according to the invention, a content of the methyl ester compound is not less than 30% by volume based on the whole of the non-aqueous electrolyte for the battery.

In another preferable embodiment of the non-aqueous electrolyte for the battery according to the invention, the non-aqueous solvent further comprises a carbonate solvent. In this context, ethylene carbonate is preferable as the carbonate solvent.

In the non-aqueous electrolyte for the battery according to the invention, a total content of the cyclic phosphazene compound represented by the general formula (I) and the methyl ester compound in the non-aqueous solvent is preferable to be not less than 60% by volume.

Also, the non-aqueous electrolyte battery according to the invention is characterized by comprising the above-described non-aqueous electrolyte for the battery, a positive electrode and a negative electrode.

According to the invention, there can be provided a non-aqueous electrolyte having high flame retardance due to the use of the non-aqueous solvent containing the specified cyclic phosphazene compound and the specified methyl ester compound, and further capable of maintaining sufficient discharge characteristics even under a high load condition when being applied to a non-aqueous electrolyte battery and giving high heat resistance to a positive electrode material of the battery. Also, there can be provided a non-aqueous electrolyte battery comprising the non-aqueous electrolyte and having high safety and excellent battery performances.

In the non-aqueous electrolyte for the battery according to the invention, it is considered that by using the methyl ester compound, a large amount of the cyclic phosphazene compound having high compatibility with the methyl ester compound and also having the high non-combustibility can be used, a highly non-combustible gas component generated by the thermal decomposition of the cyclic phosphazene compound develops non-combustibility even though the combustible methyl ester compound is used. Although the reason is not necessarily clear, it is also considered that a film formed on a surface of an electrode by a synergistic effect of the cyclic phosphazene compound and the methyl ester compound is thin and has a low resistivity and thereby can accomplish excellent discharge characteristics even under a high load condition, and further the film is excellent in the heat resistance and thereby can suppress pyrolysis of the electrolyte and the electrode material of the battery even under a high-temperature condition. However, the above-mentioned effects are not developed when only the cyclic phosphazene compound or only the methyl ester compound is used, and the above-mentioned effects are not observed when ester compounds such as propyl formate, ethyl acetate and so on except the methyl ester compounds or other aprotic organic solvents are combined with the cyclic phosphazene compounds.

BEST MODE FOR CARRYING OUT THE INVENTION

<Non-aqueous electrolyte for battery>

The non-aqueous electrolyte for the battery according to the invention will be described in detail below. The non-aqueous electrolyte for the battery according to the invention comprises the non-aqueous solvent containing the cyclic phosphazene compound represented by the general formula (I) and at least one methyl ester compound selected from the group consisting of methyl acetate, methyl propionate and methyl butyrate, and the support salt. Furthermore, the non-aqueous solvent may contain an aprotic organic solvent.

The cyclic phosphazene compound contained in the non-aqueous electrolyte for the battery according to the invention is represented by the general formula (I). In the formula (I), Rs are independently fluorine, an alkoxy group or an aryloxy group, and n is 3-4.

As the alkoxy group in R of the formula (I) are mentioned methoxy group, ethoxy group, propoxy group, butoxy group, an allyloxy group containing a double bond, an alkoxy-substituted alkoxy group such as methoxy ethoxy group, methoxy ethoxy ethoxy group or the like, and so on. Also, as the aryloxy group in R are mentioned phenoxy group, methylphenoxy group, xylenoxy group (i.e. xylyloxy group), methoxy phenoxy group and the like. A hydrogen element in the alkoxy group and the aryloxy group may be substituted with a halogen element and is preferable to be substituted with fluorine. Moreover, R in the formula (I) may be bonded with another R. In this case, two Rs are bonded with each other to form an alkylenedioxy group, an arylenedioxy group or an oxyalkylene-aryleneoxy group, and as such a bivalent group are mentioned ethylenedioxy group, propylenedioxy group, phenylenedioxy group and the like.

Rs in the general formula (I) may be same or different. Moreover, as to R in the formula (I), four or more of Rs are fluorine in view of simultaneously establishing the non-combustibility and the low viscosity.

Furthermore, n in the formula (I) is 3-4. The cyclic phosphazene compounds may be used alone or in a combination of two or more.

The methyl ester compound contained in the non-aqueous electrolyte for the battery according to the invention is selected from the group consisting of methyl acetate, methyl propionate and methyl butyrate. Among them, methyl propionate is particularly preferable in view of balancing the boiling point and the ion conductivity. These methyl ester compounds may be used alone or in a combination of two or more.

In the non-aqueous electrolyte according to the invention, the content of the cyclic phosphazene compound is preferably 20-60% by volume, more preferably 30-50% by volume based on the whole of the non-aqueous electrolyte for the battery from a viewpoint of balancing the safety and the battery performances. When the content of the cyclic phosphazene compound exceeds 60% by volume, the load characteristics of the battery is deteriorated even when the above-described methyl ester compound is used.

Also, the content of the methyl ester compound is preferably not less than 20% by volume based on the whole of the non-aqueous electrolyte for the battery in order to compatibilize a high content of the cyclic phosphazene compound. Further, the content of the methyl ester compound is more preferably not less than 30% by volume based on the whole of the non-aqueous electrolyte for the battery in order to obtain a sufficient synergistic effect with the cyclic phosphazene compound.

Furthermore, the total content of the cyclic phosphazene compound and the methyl ester compound in the non-aqueous solvent is preferably not less than 60% by volume from a viewpoint of improving the load characteristics and the heat resistance of the electrode material.

As the support salt used in the non-aqueous electrolyte for the battery of the invention is preferable a support salt serving as an ion source for a lithium ion. The support salt is not particularly limited, but preferably includes lithium salts such as $LiClO_4$, $LiBF_4$, $LiBC_4O_8$, $LiPF_6$, $LiCF_3SO_3$, $LiAsF_6$, $LiC_4F_9SO_3$, $Li(CF_3SO_2)_2N$, $Li(C_2F_5SO_2)_2N$ and so on. Among them, $LiPF_6$ is more preferable in a point that the non-combustibility is excellent. These support salts may be used alone or in a combination of two or more.

The concentration of the support salt in the non-aqueous electrolyte is preferably 0.2-2.0 mol/L (M), more preferably 0.5-1.2 mol/L (M). When the concentration of the support salt is less than 0.2 mol/L, the electric conductivity of the electrolyte cannot be sufficiently ensured and troubles may be caused in the discharge property and the charge property of the battery, while when it exceeds 2.0 mol/L, the viscosity of the electrolyte rises and the sufficient mobility of the lithium ion cannot be ensured, and hence the sufficient electric conductivity of the electrolyte cannot be ensured and troubles may be caused in the discharge property and the charge property of the battery likewise the above-mentioned case.

Also, to the non-aqueous solvent may be added various carbonate solvents commonly used in the non-aqueous electrolyte for the battery within a scope of not damaging the object of the invention. As the carbonate solvent are concretely mentioned dimethyl carbonate (DMC), diethyl carbonate (DEC), diphenyl carbonate, ethyl methyl carbonate (EMC), ethylene carbonate (EC), propylene carbonate (PC), vinylene carbonate (VC) and the like. Among them, ethylene carbonate is particularly preferable from a viewpoint that the capacity and the cyclability are excellent. These carbonate solvents may be used alone or in a combination of two or more.

In the formation of the non-aqueous electrolyte battery, the non-aqueous electrolyte according to the invention can be used as it is, but may be used through a method of impregnating into, for example, a suitable polymer, a porous support or a gelatinous material for keeping.

<Non-aqueous electrolyte battery>

Then, the non-aqueous electrolyte battery according to the invention will be described in detail. The non-aqueous electrolyte battery of the invention comprises the above-mentioned non-aqueous electrolyte for the battery, a positive electrode and a negative electrode, and may be provided with other members usually used in the technical field of the non-aqueous electrolyte battery such as a separator and the like, if necessary. In this case, the non-aqueous electrolyte battery of the invention may be constructed as a primary battery or a secondary battery.

As an active material for the positive electrode of the non-aqueous electrolyte battery according to the invention are preferably mentioned metal oxides such as $V_2O_5$, $V_6O_{13}$, $MnO_2$, $MnO_3$ and the like; lithium-containing composite oxides such as $LiCoO_2$, $LiNiO_2$, $LiMn_2O_4$, $LiFeO_2$, $LiFePO_4$ and the like; metal sulfides such as $TiS_2$, $MoS_2$ and the like; and electrically conductive polymers such as polyaniline and the like. The lithium-containing composite oxide may be a composite oxide including two or three transition metals selected from the group consisting of Fe, Mn, Co, Al and Ni. In this case, the composite oxide is represented by $LiMn_xCO_yNi_{(1-x-y)}O_2$ [wherein $0 \leq x < 1$, $0 \leq y < 1$, $0 < x+y \leq 1$], $LiMn_xNi_{(1-x)}O_2$ [wherein $0 \leq x < 1$], $LiMn_xCo_{(1-x)}O_2$ [wherein $0 \leq x < 1$], $LiCo_xNi_{(1-x)}O_2$ [wherein $0 \leq x < 1$], $LiCo_xNiyAl_{(1-x-y)}O_2$ [wherein $0 \leq x < 1$, $0 \leq y < 1$, $0 < x+y \leq 1$], $LiFe_xCo_yNi_{(1-x-y)}O_2$ [wherein $0 \leq x < 1$, $0 \leq y < 1$, $0 < x+y \leq 1$], $LiMn_xFe_yO_{2-x-y}$ or the like. Among them, with respect to the metal oxide containing Co and/or Ni easily pyrolyzed and poor in the safety, the effects of the present invention are notable. These active materials for the positive electrode may be used alone or in a combination of two or more.

As an active material for the negative electrode of the non-aqueous electrolyte battery according to the invention are preferably mentioned lithium metal itself, an alloy of lithium with Al, In, Sn, Si, Pb, Zn or the like, a metal oxide such as $TiO_2$ doped with lithium ion or the like, a metal oxide composite such as $TiO_2$-$P_2O_4$ or the like, and a carbonaceous material such as graphite or the like. These active materials for the negative electrode may be used alone or in a combination of two or more.

The positive electrode and the negative electrode may be mixed with an electrically conducting agent and a binding agent, if necessary. As the electrically conducting agent are mentioned acetylene black and the like, and as the binding agent are mentioned polyvinylidene fluoride (PVDF), polytetrafluoroethylene (PTFE), styrene-butadiene rubber (SBR), carboxymethyl cellulose (CMC) and the like. These additives may be compounded in the same compounding ratio as in the conventional case.

As the other member used in the non-aqueous electrolyte battery of the invention is mentioned a separator interposed between the positive and negative electrodes in the non-aqueous electrolyte battery so as to prevent short-circuiting of current due to the contact between the electrodes. As a material of the separator are preferably mentioned materials capable of surely preventing the contact between the electrodes and passing or impregnating the electrolyte such as non-woven fabrics, thin-layer films and the like made of a synthetic resin such as polytetrafluoroethylene, polypropylene, polyethylene, cellulose based resin, polybutylene terephthalate, polyethylene terephthalate or the like. They may be a single substance, a mixture or a copolymer. Among them, a microporous film having a thickness of about 20-50 μm and made of polypropylene or polyethylene, and a film made of cellulose based resin, polybutylene terephthalate, polyethylene terephthalate or the like are particularly preferable. In the invention, various well-known members usually used in the battery can be preferably used in addition to the above separator.

The form of the above non-aqueous electrolyte battery according to the invention is not particularly limited, but there are preferably mentioned various well-known forms such as coin type, button type, paper type, polygonal form, cylindrical type of spiral structure and so on. In case of the button type, the non-aqueous electrolyte battery can be made by preparing sheet-shaped positive and negative electrodes and sandwiching the separator between the positive and negative electrodes. Also, in case of the spiral structure, the non-aqueous electrolyte battery can be made by preparing a sheet-shaped positive electrode, sandwiching between collectors, piling a sheet-shaped negative electrode thereon and then winding them or the like.

<EXAMPLES>

The following examples are given in illustration of the invention and are not intended as limitations thereof.

(Example 1)

A non-aqueous electrolyte is prepared by dissolving $LiPF_6$ at a concentration of 1 mol/L in a mixed solvent of 30% by volume of methyl butyrate, 30% by volume of a cyclic phosphazene compound of the general formula (I) wherein n is 3, one of all Rs is cyclohexyloxy group and five thereof are fluorine, 13% by volume of ethylene carbonate and 27% by volume of dimethyl carbonate. Then, the flame retardance of the thus obtained non-aqueous electrolyte is evaluated by the following method (1) to obtain a result shown in Table 1.

(1) Evaluation of flame retardance

A burning length and a burning time of a flame ignited under an atmospheric environment are measured and evaluated according to a method arranging UL94HB method of UL (Underwriting Laboratory) standard. Concretely, a test piece is prepared by impregnating a $SiO_2$ sheet of 127 mm x 12.7 mm with 1.0 mL of the electrolyte based on UL test standard and evaluated. Evaluation standards of non-combustibility, flame retardance, self-extinguishing property and combustion property are shown below.
<Evaluation of non-combustibility> In a case that a test flame does not ignite a test piece (combustion length: 0 mm), it is evaluated that there is non-combustibility.
<Evaluation of flame retardance> In a case that the ignited flame does not arrive at a line of 25 mm and the ignition is not observed in the falling object, it is evaluated that there is flame retardance.
<Evaluation of self-extinguishing property> In a case that the ignited flame extinguishes at a line of 25-100 mm and the ignition is not observed in a falling object, it is evaluated that there is self-extinguishing property.
<Evaluation of combustion property> In a case that the ignited flame exceeds a line of 100 mm, it is evaluated that there is combustion property.
Then, lithium-cobalt composite oxide [$LiCoO_2$] is used as an active material for a positive electrode, and this oxide, acetylene black as an electrically conducting agent and polyvinylidene fluoride as a binding agent are mixed at a mass ratio of 94:3:3 and dispersed into N-methylpyrrolidone to prepare a slurry, and the slurry is applied on an aluminum foil as a collector for a positive electrode, dried and then punched out in the form of a disk having a diameter of 12.5 mm to make a positive electrode. Also, an artificial graphite is used as an active material for a negative electrode, and the artificial graphite and polyvinylidene fluoride as a binding agent are mixed at a mass ratio of 90:10 and dispersed into an organic solvent (mixed solvent of 50/50% by mass of ethyl acetate and ethanol) to prepare a slurry, and the slurry is applied on a copper foil as a collector for a negative electrode, dried and then punched out in the form of a disk having a diameter of 12.5 mm to make a negative electrode. Then, the positive and negative electrodes are overlapped through a separator (micro-porous film: made of polypropylene) impregnated with the electrolyte, and accommodated in a stainless case serving as a positive terminal, and sealed with a stainless sealing plate serving as a negative terminal through a polypropylene gasket to prepare a coin-type battery (non-aqueous electrolyte secondary battery) having a diameter of 20 mm and a thickness of 1.6 mm. With respect to the resulting coin-type battery, load characteristics are evaluated according to the following method (2). Further, with respect to a coin-type battery prepared as in the same manner, the heat resistance of the positive electrode is evaluated according to the following method (3).

(2) Evaluation of load characteristics for the coin-type battery

With respect to the thus obtained coin-type battery, discharge-recharge are repeated in an atmosphere of 20°C at a voltage range of 4.2-3.0 V and a current density of 0.3 mA/cm$^2$ two cycles, and the discharge capacity is measured at this time. Further, the battery is recharged under the same charging condition, then the discharge capacity is measured at a current density of 1.2 mA/cm$^2$, and the high-load discharge rate is calculated from the following equation:

$$\text{High-load discharge rate} = (\text{the discharge capacity at 1.2 mA/cm}^2) / (\text{the discharge capacity at 0.3 mA/cm}^2) \times 100 \ (\%)$$

and is used as an indication for the load characteristics. A result is shown in Table 1.

(3) Evaluation of heat resistance of the positive electrode by the DCS measurement

The same coin-type battery as described above is made and two cycles of the discharge-recharge are repeated in an atmosphere of 20°C within a voltage range of 4.2-3.0 V at a current density of 0.3 mA/cm$^2$, further the recharge up to 4.2 V is conducted under the same charging condition to make the battery fully charged. Then, the battery is broken down and the positive electrode plate still holding the electrolyte is punched out at 4 mm$\phi$ to obtain a sample piece. The sample piece is encapsulated in a pressure tight closed container made of stainless and heated in the differential scanning calorimetry (DSC) apparatus from room temperature to 400°C at a rate of 10°C/min to measure an initial exothermic peak temperature, and the temperature is used as an indication for the heat resistance of the positive electrode. A result is shown in Table 1.

(Example 2)

A non-aqueous electrolyte is prepared by dissolving LiPF$_6$ at a concentration of 1.0 mol/L in a mixed solvent of 70% by volume of methyl propionate, 5% by volume of a cyclic phosphazene compound of the general formula (I) wherein n is 3, two of all Rs are methoxy group and four thereof are fluorine and 25% by volume of a cyclic phosphazene compound of the general formula (I) wherein n is 3, one of all Rs is phenoxy group and five thereof are fluorine, and the flame retardance of the thus obtained non-aqueous electrolyte is evaluated. Also, a non-aqueous electrolyte secondary battery is made in the same manner as in Example 1, and the load characteristics and the heat resistance of the positive electrode are evaluated, respectively. Results are shown in Table 1.

(Example 3)

A non-aqueous electrolyte is prepared by dissolving LiPF$_6$ at a concentration of 1.0 mol/L in a mixed solvent of 40% by volume of methyl acetate, 10% by volume of a cyclic phosphazene compound of the general formula (I) wherein n is 3, two of all Rs are bonded with propylenedioxy group and four thereof are fluorine, 30% by volume of a cyclic phosphazene compound of the general formula (I) wherein n is 4, one of all Rs is ethoxy group and seven thereof are fluorine, 10% by volume of ethylene carbonate and 10% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the heat resistance of the positive electrode are evaluated, respectively. Results are shown in Table 1.

(Example 4)

A non-aqueous electrolyte is prepared by dissolving LiPF$_6$ at a concentration of 1.0 mol/L in a mixed solvent of 45% by volume of methyl propionate, 50% by volume of a cyclic phosphazene compound of the general formula (I) wherein n is 3, one of all Rs is ethoxy group and five thereof are fluorine and 5% by volume of ethylene carbonate, and the flame retardance of the thus obtained non-aqueous electrolyte is evaluated. Also, a non-aqueous electrolyte secondary battery is made in the same manner as in Example 1, and the load characteristics and the heat resistance of the positive electrode are evaluated, respectively. Results are shown in Table 1.

(Example 5)

A non-aqueous electrolyte is prepared by dissolving LiPF$_6$ at a concentration of 1.0 mol/L in a mixed solvent of 20% by volume of methyl acetate, 35% by volume of methyl propionate, 40% by volume of a cyclic phosphazene compound of the general formula (I) wherein n is 3, one of all Rs is trifluoroethoxy group and five thereof are fluorine and 5% by volume of ethylene carbonate, and the flame retardance of the thus obtained non-aqueous electrolyte is evaluated. Then, a non-aqueous electrolyte secondary battery is made in the same manner as in Example 1 except that LiCo$_{0.15}$Ni$_{0.8}$Al$_{0.05}$O$_2$ is used instead of the positive electrode of LiCoO$_2$ used in Example 1, and the load characteristics and the heat resistance of the positive electrode are evaluated, respectively. Results are shown in Table 1.

(Comparative Example 1)

A non-aqueous electrolyte is prepared by dissolving LiPF$_6$ at a concentration of 1.0 mol/L in a mixed solvent of 33% by volume of ethylene carbonate and 67% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the heat resistance of the positive electrode are evaluated, respectively. Results are shown in Table 1.

(Comparative Example 2)

A non-aqueous electrolyte is prepared by dissolving LiPF$_6$ at a concentration of 1.0 mol/L in a mixed solvent of 20% by volume of methyl acetate, 35% by volume of methyl propionate, 5% by volume of ethylene carbonate and 40% by volume of dimethyl carbonate, and the flame retardance of the thus obtained non-aqueous electrolyte is evaluated. Then, a non-aqueous electrolyte secondary battery is made in the same manner as in Example 1 except that LiCo$_{0.15}$Ni$_{0.8}$Al$_{0.05}$O$_2$ is used instead of the positive electrode of LiCoO$_2$ used in Example 1 , and the load characteristics and the heat resistance of the positive electrode are evaluated, respectively. Results are shown in Table 1.

(Comparative Example 3)

A non-aqueous electrolyte is prepared by dissolving $LiPF_6$ at a concentration of 1.0 mol/L in a mixed solvent of 15% by volume of a cyclic phosphazene compound of the general formula (I) wherein n is 3, one of all Rs is cyclohexyloxy group and five thereof are fluorine, 28% by volume of ethylene carbonate and 57% by volume of dimethyl carbonate, and the flame retardance of the thus obtained non-aqueous electrolyte is evaluated. Also, a non-aqueous electrolyte secondary battery is made in the same manner as in Example 1, and the load characteristics and the heat resistance of the positive electrode are evaluated, respectively. Results are shown in Table 1.

(Example 6)

A non-aqueous electrolyte is prepared by dissolving $LiPF_6$ at a concentration of 1.0 mol/L in a mixed solvent of 25% by volume of methyl propionate, 25% by volume of a cyclic phosphazene compound of the general formula (I) wherein n is 3, one of all Rs is ethoxy group and five thereof are fluorine, 5% by volume of ethylene carbonate and 45% by volume of ethyl methyl carbonate, and the flame retardance of the thus obtained non-aqueous electrolyte is evaluated. Also, a non-aqueous electrolyte secondary battery is made in the same manner as in Example 1, and the load characteristics and the heat resistance of the positive electrode are evaluated, respectively. Results are shown in Table 1.

Table 1

| | Evaluation of flame retardance | Evaluation of load characteristics High-load discharge rate (%) | Evaluation of heat resistance of positive electrode Exothermic peak temperature in DSC (°C) |
|---|---|---|---|
| Example 1 | Non-combustibility | 82 | 246 |
| Example 2 | Non-combustibility | 88 | 272 |
| Example 3 | Non-combustibility | 86 | 270 |
| Example 4 | Non-combustibility | 82 | 277 |
| Example 5 | Non-combustibility | 88 | 268 |
| Comparative Example 1 | Combustibility | 81 | 210 |
| Comparative Example 2 | Combustibility | 83 | 205 |
| Comparative Example 3 | Flame retardance | 58 | 214 |
| Example 6 | Non-combustibility | 72 | 224 |

As seen from Examples 1-5 in Table 1, the non-aqueous electrolyte containing not less than 60% by volume of the phosphazene compound of the formula (I) and the methyl ester compound has a non-combustibility, the battery using the non-aqueous electrolyte has the excellent discharge characteristics even under the high-load condition, and the non-aqueous electrolyte can give the high heat resistance to the charged positive electrode as compare with the commonly used electrolyte (Comparative Example 1). Thus, it is confirmed that the non-aqueous electrolyte battery exhibiting the non-combustibility and being excellent in the battery performances and the heat resistance of the positive electrode can be obtained by the non-aqueous electrolyte according to the invention.

On the other hand, as shown in Comparative Example 2, when the methyl ester compound is used but the phosphazene compound of the formula (I) is not added, it is seen that the electrolyte exhibits the combustibility and the high heat stabilizing effect on the electrode material as confirmed in Example 5 is not observed.

Also, as shown in Comparative Example 3, when the methyl ester compound is not used, adding a large amount of the phosphazene compound of the formula (I) causes a separation into two layers, so that not less than 16% by volume of the phosphazene compound of the formula (I) cannot be added. As a result, it is seen that the flame retardance can be given but the load characteristics are deteriorated as compared with Comparative Example 1 and further the improvement in the heat resistance of the positive electrode as shown in Example 1 cannot be accomplished.

Moreover, as shown in Example 6, when the total content of the phosphazene compound represented by the formula (I) and the methyl ester compound is 50% by volume, the non-combustibility is exhibited and the load characteristics and the heat resistance of the positive electrode are improved to some extent but the substantial improvement as shown in Examples 1-5 cannot be accomplished. Therefore, it is seen that the total content of the cyclic phosphazene compound of the formula (I) and the methyl ester compound is preferably not less than 60% by volume.

As seen from the above results, there can be provided the non-aqueous electrolyte battery, in which the non-combustibility and the battery performances are excellent and the heat resistance of the positive electrode is improved, by using the non-aqueous electrolyte characterized by containing the cyclic phosphazene compound represented by the general formula (I) and the methyl ester compound.

**Claims**

1. A non-aqueous electrolyte for a battery comprising a support salt, **characterized by** further comprising a non-aqueous solvent containing a cyclic phosphazene compound represented by the following general formula (I):

$$(NPR_2)_n \qquad (I)$$

wherein Rs are independently fluorine, an alkoxy group or an aryloxy group, at least four of the Rs in the general formula (I) are fluorine and at least one of the Rs is an alkoxy group or an aryloxy group; and n is 3-4, and at least one methyl ester compound selected from the group consisting of methyl acetate, methyl propionate and methyl butyrate.

2. A non-aqueous electrolyte for a battery according to claim 1, wherein a content of the cyclic phosphazene compound represented by the general formula (I) is 30-50% by volume based on the whole of the non-aqueous electrolyte for the battery.

3. A non-aqueous electrolyte for a battery according to claim 1, wherein a content of the methyl ester compound is not less than 30% by volume based on the whole of the non-aqueous electrolyte for the battery.

4. A non-aqueous electrolyte for a battery according to any one of claims 1-3, wherein the non-aqueous solvent further comprises a carbonate solvent.

5. A non-aqueous electrolyte for a battery according to claim 4, which comprises ethylene carbonate as the carbonate solvent.

6. A non-aqueous electrolyte according to any one of claims 1-5, wherein a total content of the cyclic phosphazene compound represented by the general formula (I) and the methyl ester compound in the non-aqueous solvent is not less than 60% by volume.

7. A non-aqueous electrolyte battery comprising a non-aqueous electrolyte for a battery as claimed in any one of claims 1-6, a positive electrode and a negative electrode.

**Patentansprüche**

1. Nichtwässriger Elektrolyt für eine Batterie, umfassend ein Trägersalz, **dadurch gekennzeichnet, dass** er ferner ein nichtwässriges Lösungsmittel umfasst, das eine cyclische Phosphazenverbindung, die durch die folgende allgemeine Formel (I) dargestellt ist:

$$(NRP_2)_n \qquad (I)$$

wobei R unabhängig Fluor, eine Alkoxygruppe oder eine Aryloxygruppe sind, mindestens vier der R in der allgemeinen Formel (I) Fluor sind und mindestens eines der R eine Alkoxygruppe oder eine Aryloxygruppe ist; und n 3 - 4 beträgt, und mindestens eine Methylesterverbindung ausgewählt aus der Gruppe bestehend aus Methylacetat, Methylpropionat und Methylburyrat enthält.

**2.** Nichtwässriger Elektrolyt für eine Batterie nach Anspruch 1, wobei ein Gehalt der cyclischen Phosphazenverbindung, die durch die allgemeine Formel (I) dargestellt ist, 30 - 50 Volumen-%, auf das Gesamte des nichtwässrigen Elektrolyts für die Batterie bezogen, beträgt.

**3.** Nichtwässriger Elektrolyt für eine Batterie nach Anspruch 1, wobei ein Gehalt der Methylesterverbindung nicht weniger als 30 Volumen-%, auf das Gesamte des nichtwässrigen Elektrolyts für die Batterie bezogen, beträgt.

**4.** Nichtwässriger Elektrolyt für eine Batterie nach einem der Ansprüche 1 - 3, wobei das nichtwässrige Lösungsmittel ferner ein Carbonatlösungsmittel umfasst.

**5.** Nichtwässriger Elektrolyt für eine Batterie nach Anspruch 4, der Ethylencarbonat als Carbonatlösungsmittel umfasst.

**6.** Nichtwässriger Elektrolyt nach einem der Ansprüche 1 - 5, wobei ein Gesamtgehalt der cyclischen Phosphazenverbindung, die durch die allgemeine Formel (I) dargestellt ist, und der Methylesterverbindung in dem nichtwässrigen Lösungsmittel nicht weniger als 60 Volumen-% beträgt.

**7.** Batterie mit nichtwässrigem Elektrolyt, umfassend einen nichtwässrigen Elektrolyt für eine Batterie nach einem der Ansprüche 1 - 6, eine positive Elektrode und eine negative Elektrode.

**Revendications**

**1.** Électrolyte non aqueux pour une batterie comprenant un sel formant support, **caractérisé en ce qu'**il comprend en outre un solvant non aqueux contenant un composé phosphazène cyclique représenté par la formule générale suivante (I):

$$(NPR_2)_n \qquad (I)$$

dans laquelle les R sont indépendamment le fluor, un groupe alcoxy ou un groupe aryloxy, au moins quatre des R dans la formule générale (I) sont le fluor et au moins l'un des R est un groupe alcoxy ou un groupe aryloxy; et n a la valeur de 3 à 4, et au moins un composé ester de méthyle sélectionné parmi le groupe constitué de l'acétate de méthyle, du propionate de méthyle et du butyrate de méthyle.

**2.** Électrolyte non aqueux pour une batterie selon la revendication 1, dans lequel une teneur du composé phosphazène cyclique représenté par la formule générale (I) est de 30 à 50 % en volume sur la base de l'ensemble de l'électrolyte non aqueux pour la batterie.

**3.** Électrolyte non aqueux pour une batterie selon la revendication 1, dans lequel une teneur du composé ester de méthyle n'est pas inférieure à 30 % en volume sur la base de l'ensemble de l'électrolyte non aqueux pour la batterie.

**4.** Électrolyte non aqueux pour une batterie selon l'une quelconque des revendications 1 à 3, dans lequel le solvant non aqueux comprend en outre un solvant carbonate.

**5.** Électrolyte non aqueux pour une batterie selon la revendication 4, qui comprend du carbonate d'éthylène comme solvant carbonate.

**6.** Électrolyte non aqueux selon l'une quelconque des revendications 1 à 5, dans lequel une teneur totale du composé phosphazène cyclique représenté par la formule générale (I) et du composé ester de méthyle dans le solvant non aqueux n'est pas inférieure à 60 % en volume.

**7.** Batterie à électrolyte non aqueux comprenant un électrolyte non aqueux pour une batterie tel que revendiqué selon l'une quelconque des revendications 1 à 6, une électrode positive et une électrode négative.

**EP 2 157 656 B1**

**REFERENCES CITED IN THE DESCRIPTION**

**Patent documents cited in the description**

- JP H04184870 A
- JP H0822839 A
- JP 2000182669 A
- JP H1167267 A
- JP H10189040 A
- JP 2003109659 A
- JP H0613108 A
- US 2006124973 A
- US 2006134527 A
- US 2005153207 A
- JP 2006185829 A

**Non-patent literature cited in the description**

- *Journal of Power Sources,* 1998, vol. 70, 16-20